# EUROPEAN PATENT SPECIFICATION

(11) **EP 3 617 975 B1**
(45) Date of publication and mention of the grant of the patent: **19.02.2025**
(21) Application number: 19192245.9
(22) Date of filing: 19.08.2019
(51) Int. Cl.: G06Q 20/20, G06Q 20/32, G06Q 30/02, G07G 1/00, G07G 1/01

(54) **INFORMATION PROCESSING DEVICE**
INFORMATIONSVERARBEITUNGSVORRICHTUNG
DISPOSITIF DE TRAITEMENT D'INFORMATIONS

(30) Priority: 23.08.2018 JP 2018156707
(43) Date of publication of application: 04.03.2020
(73) Proprietor: Toshiba Tec Kabushiki Kaisha, 141-8562 Tokyo (JP)
(72) Inventor: Iizaka, Hitoshi, Tokyo, 141-8562 (JP); Naito, Hidehiro, Tokyo, 141-8562 (JP); Miyakoshi, Hidehiko, Tokyo, 141-8562 (JP); Kawaguchi, Yuki, Tokyo, 141-8562 (JP); Ogomori, Naoki, Tokyo, 141-8562 (JP)
(74) Representative: Hoffmann Eitle

(56) References cited:
- EP-A1- 3 293 685
- WO-A1-2016/051004
- WO-A1-2016/135142
- US-A1- 2008 245 863
- US-A1- 2014 140 574
- US-A1- 2015 063 638
- US-A1- 2016 132 855

## Description

### FIELD

Embodiments described herein relate generally to an information processing device.

### BACKGROUND

There are information processing devices, such as Point of Sale (POS) terminals, that identify a commodity to be purchased by a customer with generic object recognition or the like. Further, there are information processing devices that identify a commodity either by performing the object recognition or by scanning of a code symbol attached to the commodity, such as a barcode.

It is typically considered that a commodity is identified more accurately and rapidly by the scanning of the code symbol rather than by use of object recognition. Therefore, these information processing apparatuses preferentially perform scanning of the code symbol for any commodity on which the code symbol can be detected, and performs object recognition only on those commodities on which a code symbol is not attached or not detected. Often, commodity items, such as fruits and vegetables, do not have a code symbol attached and these items require analysis of exterior characteristics to identify.

However, in existing information processing devices capable of executing both scanning of the code symbol and object recognition, an inconvenience could occur in which object recognition is executed on an unintended article, that is, an article to which a code symbol has been attached, but which was not detected prior to initiation of object recognition processing on the article.

WO 2016/135142 A1 relates to a system for the identification of products in a shopping cart comprising a computer comprising a database; an optical camera for monitoring the shopping cart; a software for identifying products in the shopping cart, which comprises an image recognition software adapted for discerning between different products in the shopping cart; an optional barcode scanner. Further, a respective method and computer program product is provided.

US 2015/0063638 A1 relates to a commodity registration apparatus and a commodity registration method. In particular, it relates to a commodity registration apparatus that recognizes and registers a commodity on the basis of a commodity image captured by an image capturing section, and detects whether or not there is a barcode in the captured commodity image.

US 2008/0245863 A1 relates to a storefront shopping technique for presenting information to a shopper aboutproximate for-sale items; specifically, both the shopper and the for-sale items can be associated with location beacons, and the presented information can be specific to the shopper.

WO2016/051004A1 relates to a system whereby customers at a shopping center are first identified and then provided with a transport device for carrying any items that the customer picks up before reaching the corresponding cash register or dispenser/collection units.

### SUMMARY OF THE INVENTION

One of the objects of the present invention is to improve prior art techniques and overcome at least some of the prior art problems as for instance above illustrated.

The present invention is defined by the independent claims. Preferred embodiments are defined by the dependent claims. Further aspects are provided for facilitating the understanding of the invention.

### DESCRIPTION OF THE DRAWINGS

FIG. 1 is a perspective view illustrating the exterior of an information processing device in a first embodiment.
FIG. 2 is a diagram illustrating an example of a hardware configuration of the information processing device.
FIG. 3 is a diagram illustrating an example of a hardware configuration of a beacon terminal.
FIG. 4 is a diagram illustrating functional aspects in a controller of the information processing device.
FIG. 5 is a flowchart illustrating an example of processing executed by the information processing device.
FIG. 6 is a diagram illustrating disposition of beacon terminals in a store in a second embodiment.
FIG. 7 is a diagram illustrating a positional relation between the information processing device and beacon terminals.
FIG. 8 is a flowchart illustrating a flow of processing executed by the information processing device.

### DETAILED DESCRIPTION

An information processing device according to one embodiment can reduce unnecessary performance of generic object recognition on commodities having a bar code or the like.

According to one example, an information processing device on a shopping basket or a shopping cart includes a communication interface configured to communicate with an imaging device on the shopping basket or the shopping cart and a beacon at a product display area, and a processor configured to identify the commodity by either reading a commodity code in an image or object recognition on the image, and according to on a signal received from at least one beacon, switch between a first mode where the commodity is identified by reading the commodity code, and a second mode where the commodity can be identified by either reading the commodity code or object recognition.

### (First Embodiment)

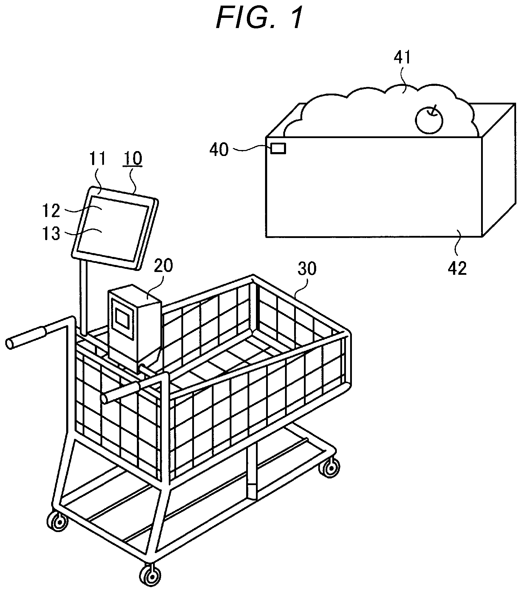

A first embodiment is explained with reference to the drawings. FIG. 1 is a perspective view illustrating the exterior of an information processing device 10 in this embodiment. The information processing device 10 is attached to, together with a reading device 20, a shopping cart 30 or a shopping basket used for storing commodities in a retail store. The information processing device 10 operates as a sales data processing device that registers the commodities to be purchased, that is, records information concerning the commodities, and a commodity information presenting device that presents information concerning substitutable commodities.

The information processing device 10 has an exterior and functions like a tablet computer or a tablet terminal and includes a main body 11, a display 12, and an input device 13.

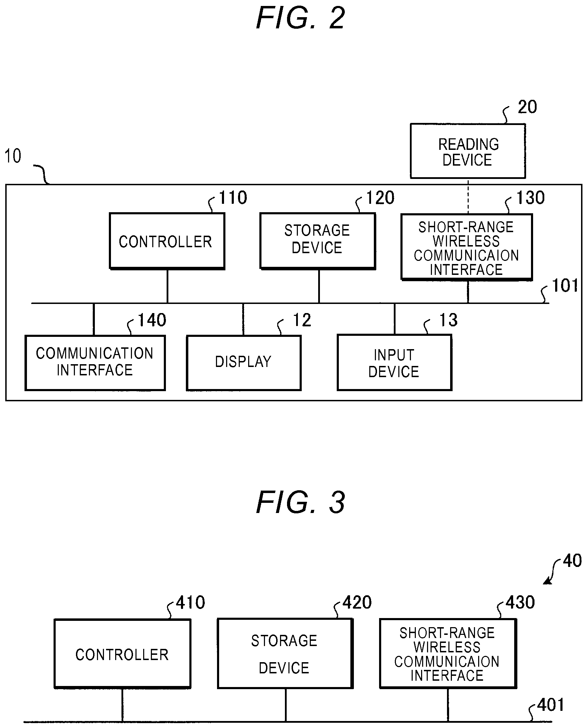

FIG. 2 is a diagram illustrating an example of a hardware configuration of the information processing device 10. The information processing device 10 further includes a controller 110, a storage device 120, a short-range wireless communication interface 130, and a communication interface 140. The controller 110, the storage device 120, the short-range wireless communication interface 130, the communication interface 140, the display 12, and the input device 13 are connected to one another via a system bus 101 such as a data bus or an address bus.

The display 12 is a tabular display device such as a liquid crystal display. The input device 13 is a touch panel superimposed on the surface of the display 12. The main body 11 is a thin box-like housing having an opening on one surface. The main body 11 houses the hardware components explained above (e.g., the controller 110, the storage device 120, the short-range wireless communication interface 130, the communication interface 140, the display 12, and the input device 13). The opening of the main body 11 exposes a region where the input device 13 receives an input by an operator.

The controller 110 is a computer component and includes a CPU (Central Processing Unit), a ROM (Read Only Memory), and a RAM (Random Access Memory) . The ROM is a non-volatile memory that stores various computer programs and data. The RAM is a volatile memory that temporarily stores various computer programs and various data. The CPU executes the computer programs stored in the ROM and the storage device 120 to achieve various operations of the information processing device 10.

The storage device 120 is a storage device such as an HDD (Hard Disk Drive) or an SSD (Solid State Drive) . The storage device 120 stores various computer programs executable by the controller 110 (e.g., CPU), setting information, and the like.

The storage device 120 stores a PLU (Price look-up) file therein. The PLU file stores commodity codes, which are uniquely allocated to commodities, and commodity information, such as names, unit prices, and classifications, in association with each other. The PLU file also stores feature values, reference images, and the like of commodities, which are usedby the informationprocessing device 10 in specifying the commodities through object recognition. The feature values are data such as colors of the commodities, unevenness of the surfaces of the commodities, and the like, read from the reference images of the commodities.

The communication interface 140 is a communication interface for communicating with a server apparatus and other information processing terminals, both of which are not illustrated in FIG. 2, through wireless LAN communication, mobile communication, or the like.

In this embodiment, as shown in Fig. 1, a beacon terminal 40 is installed on a product display area 42 such as display case, bin, shelf, or the like where commodities without code symbol 41, such as vegetables and fruits, are displayed. The beacon terminal 40 may be installed on or near any object used for displaying a commodity in a store. The commodity without code symbol 41 is a commodity on which a code symbol such as a barcode or a two-dimensional code is not attached. The information processing device 10 includes a functional section (explained below) that performs predetermined processing upon reception of a radio wave emitted by the beacon terminal 40.

FIG. 3 is a diagram illustrating an example of a hardware configuration of the beacon terminal 40. The beacon terminal 40 includes a controller 410, a storage device 420, and a short-range wireless communication interface 430. These hardware components are connected to one another via a system bus 401 such as a data bus or an address bus.

The controller 410 includes computer components such as a CPU, a ROM, and a RAM. The ROM is a nonvolatile memory that stores various computer programs and data. The RAM is a volatile memory that temporarily stores various computer programs and rewrites various data. The CPU executes the computer programs stored in the ROM and the storage device 420 to achieve various operations of the beacon terminal 40.

The storage device 420 is a storage device such as a flash memory and stores beacon IDs, distribution information, and the like.

The short-range wireless communication interface 430 is a communication interface for short-range wireless communication such as BLE (Bluetooth Low Energy) or a Bluetooth-type protocol. The short-range wireless communication interface 430 communicates with the information processing device 10 and the like present within a communication zone.

The controller 410 of the beacon terminal 40 distributes the beacon IDs and the distribution information stored in the storage device 420 from the short-range wireless communication interface 430 by broadcasting the beacon IDs and the distribution information to each of information processing devices 10 present within the communication zone.

In the information processing device 10, the short-range wireless communication interface 130 performs communication with the beacon terminal 40. The short-range wireless communication interface 130 is a communication interface for performing short-range wireless communication such as BLE. The short-range wireless communication interface 130 communicates with the beacon terminal 40 and the reading device 20.

The reading device 20 includes an imaging device such as a CCD (Charge Coupled Device) and reads information concerning a commodity from an image captured by the imaging device. More in detail, the reading device 20 outputs, to the information processing device 10, code information obtained by reading or decoding a code symbol such as a barcode or a two-dimensional code attached on the surface of the commodity, and an image obtained by imaging the exterior of the commodity.

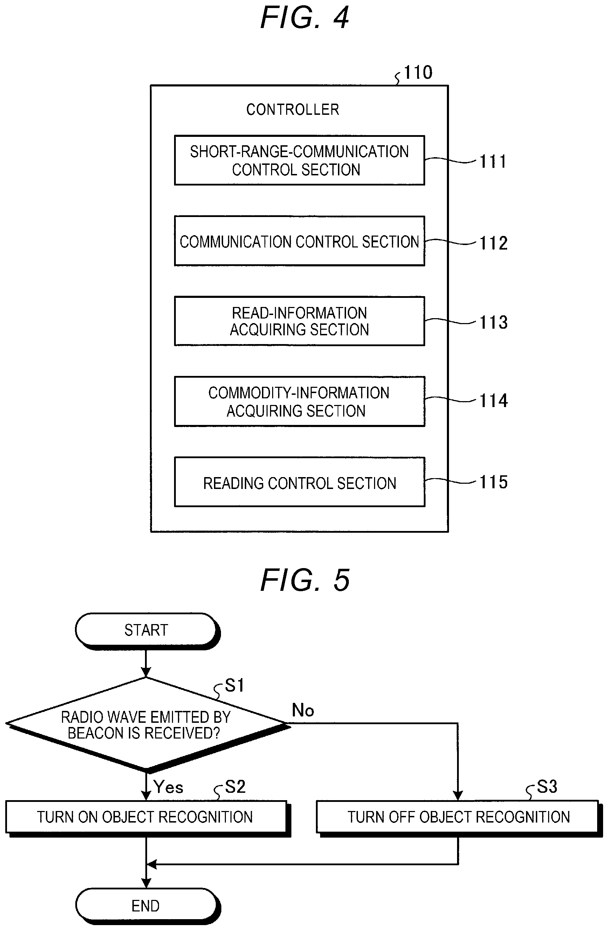

FIG. 4 is a diagram illustrating functional sections achieved by the controller 110 of the information processing device 10. The controller 110 includes a short-range-communication control section 111, a communication control section 112, a read-information acquiring section 113, a commodity-information acquiring section 114, and a reading control section 115. The controller 110 executes computer programs stored in the ROM and the storage device 120 to achieve the functional sections explained above.

The short-range-communication control section 111 controls the short-range wireless communication interface 130 to perform short-range wireless communication with the beacon terminal 40. For example, the short-range-communication control section 111 receives distribution information, such as beacon IDs, distributed from the beacon terminal 40 by broadcast. Additionally, the short-range-communication control section 111 controls the short-range wireless communication interface 130 to establish one-to-one communication with the reading device 20.

The communication control section 112 controls the communication interface 140 to perform communication with the server apparatus and the like. The read-information acquiring section 113 acquires the code information and the captured image input from the reading device 20.

The commodity-information acquiring section 114 is one example of a first commodity-information acquiring section and is one example of a second commodity-information acquiring section. The commodity-information acquiring section 114 extracts, from the PLU file, information concerning a commodity matching the code information and the captured image acquired by the read-information acquiring section 113.

More specifically, if the read-information acquiring section 113 acquires the code information, the commodity-information acquiring section 114 searches the PLU file for a commodity code matching the code information and acquires commodity information associated with the commodity code.

If the read-information acquiring section 113 acquires the captured image, the commodity-information acquiring section 114 performs object recognition based on the captured image to obtain a feature value, and acquires, from the PLU file, information concerning a commodity matching the feature value.

Concerning the object recognition for recognizing an object included in an image, a recognition technique is explained in, for example, a literature described below.

Keiji Yanai, "Present and Future of Generic Object Recognition", Journal of the Information Processing Society of Japan, Vol. 48, No. SIG16.

The commodity-information acquiring section 114 switches an operation state of the commodity-information acquiring section 114 between a first operation state and a second operation state under the control of the reading control section 115 explained below. The commodity-information acquiring section 114 in the first operation state performs only commodity recognition based on code information and does not perform commodity recognition based on a captured image. The commodity-information acquiring section 114 in the second operation state performs the commodity recognition based on the captured image in addition to the commodity recognition based on the code information.

Upon receipt of a beacon ID from the beacon terminal 40, the reading control section 115 instructs the commodity-information acquiring section 114 to switch the operation state to the second operation state.

If a predetermined operation input is performed via the input device 13, the reading control section 115 instructs the commodity-information acquiring section 114 to switch the operation state to the second operation state. That is, for example, if a customer using the shopping cart 30 desires to perform commodity recognition irrespective of presence or absence of reception of a beacon ID, the information processing device 10 allows the customer to do so by switching the operation state to the second operation state with a predetermined operation.

Upon startup, the reading control section 115 instructs the commodity-information acquiring section 114 to operate in the first operation state. Thereafter, basically, the commodity-information acquiring section 114 maintains the first operation state and switches the operation state if an instruction for switching the operation state is given from the reading control section 115.

In such a configuration, the information processing device 10 stores, as information concerning a commodity to be purchased, in a predetermined region set in the storage device 120 or the like, commodity information of the commodity matching the code information or the captured image sent from the reading device 20.

A customer, who uses the shopping cart 30 to which the information processing device 10 and the reading device 20 are attached, causes the reading device 20 to read a commodity and thereafter puts the commodity in the shopping cart 30. The shopping cart 30 may include a scale that measures a total weight of commodities carried by the shopping cart 30. The information processing device 10 may receive an output of the scale and confirm whether the total weight increases by weight corresponding to the commodity read by the reading device 20.

The operation of the information processing device 10 is explained with reference to FIG. 5. FIG. 5 is a flowchart illustrating an example of processing executed in the information processing device 10.

If the controller 110 of the information processing device 10 functions as the short-range-communication control section 111 and receives a beacon ID of the beacon terminal 40 via the short-range wireless communication interface 130 (Yes in S1), the controller 110 functions as the reading control section 115 and turns on object recognition (aspect S2).

In this embodiment, the turning on the object recognition means instructing the commodity-information acquiring section 114 to switch the operation state to the second operation state. If the current operation state is the first operation state, the commodity-information acquiring section 114 receiving the instruction switches the operation state to the second operation state. If the current operation state is the second operation state, the commodity-information acquiring section 114 maintains the current operation state as it is.

In aspect S1, if the controller 110, functioning as the short-range-communication control section 111, does not receive the beacon ID of the beacon terminal 40 via the short-range wireless communication interface 130 (No in S1), the controller 110 functions as the reading control section 115 and turns off the object recognition (aspect S3).

In an example, turning off the object recognition means instructing the commodity-information acquiring section 114 to switch the operation state to the first operation state. If the current operation state is the second operation state, the commodity-information acquiring section 114 receiving the instruction switches the operation state to the first operation state. If the current operation state is the first operation state, the commodity-information acquiring section 114 maintains the current operation state as it is.

In this embodiment, if the shopping cart 30 approaches the product display area 42 and the information processing device 10 (attached to the shopping cart 30) receives the beacon ID, the information processing device 10 switches the object recognition to ON in preparation for reading of the commodities without code symbol 41 such as vegetables and fruits. If the shopping cart 30 moves away from the product display area 42 and the information processing device 10 attached to the shopping cart 30 does not receive the beacon ID any more, the information processing device 10 switches the object recognition to OFF and performs commodity recognition based on a code symbol.

According to this embodiment explained above, the object recognition can be performed only near the product display area 42 in which the commodities without code symbol 41 are displayed. Consequently, for example, it is possible to abstain from the object recognition in a place where it is not assumed to perform reading of the commodities without code symbol 41.

Even when in the first operation state, in which the object recognition is not performed, the state can be manually switched to the second operation state by the customer's operation. Therefore, for example, a commodity without code symbol 41 brought from a product display area 42 by a companion of the customer controlling the shopping cart 30 at a position away from the particular product display area 42 from which the companion acquired the commodity without the code symbol 41, can be recognized by object recognition by manually switching the state to the second operation state as needed.

In this embodiment, the reading device 20 and the information processing device 10 communicate with each other by the wireless communication. However, in one embodiment, the reading device 20 and the information processing device 10 are not limited to this. For example, the reading device 20 and the information processing device 10 may communicate with each other by wired communication, the reading device 20 may be directly coupled to the information processing device 10, or the reading device 20 may be incorporated in the information processing device 10.

In this embodiment, the reading control section 115 instructs the commodity-information acquiring section 114 to switch the first operation state and the second operation state. However, in one embodiment, the reading control section 115 and the commodity-information acquiring section 114 are not limited to this.

For example, the commodity-information acquiring section 114 may be always in the second operation state in this embodiment. The reading control section 115 may instruct the read-information acquiring section 113 to switch execution and non-execution of acquisition of a captured image.

For example, the reading control section 115 may instruct the reading device 20 to switch the operation state. In this case, the commodity-information acquiring section 114 is always in the second operation state. The reading device 20 switches the operation state between the first operation state and the second operation state under the control of the reading control section 115. If detecting a code symbol from a captured image, the reading device 20 in the first operation state reads code information from the code symbol and outputs the code information to the information processing device 10. In addition, the reading device 20 in the second operation state outputs the captured image to the information processing device 10 if a code symbol cannot be detected from the captured image.

### (Second Embodiment)

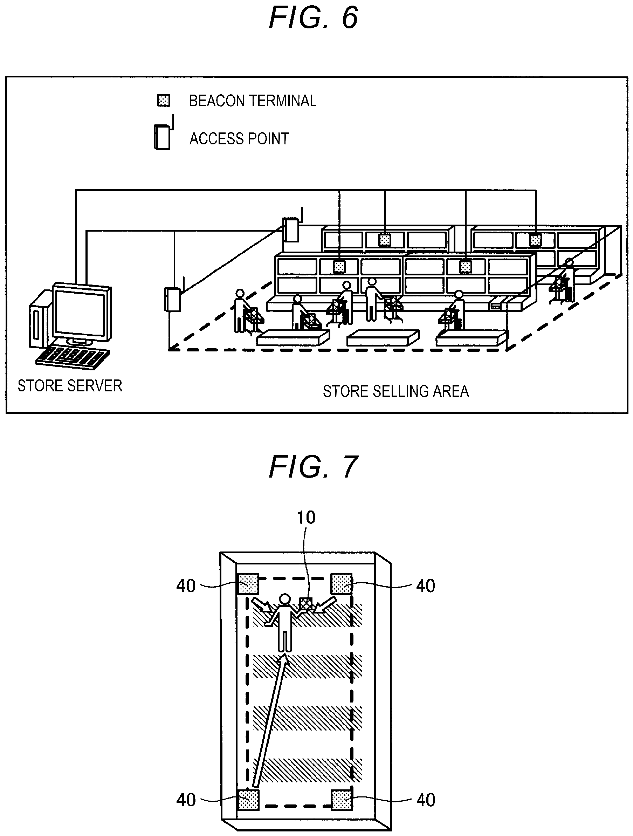

A second embodiment is explained below. In this explanation, the same components as the components in the first embodiment are denoted by the same reference numerals and signs. Detailed explanation of the components having the same functions is omitted. FIG. 6 is diagram illustrating disposition of beacon terminals in a store in this embodiment. In this embodiment, a plurality of beacon terminals 40 are generally uniformly disposed in the store. In the store, a plurality of access points covering wireless communication in the store are installed. The access points relay communication signals between the information processing device 10 and a store server.

The information processing device 10 in this embodiment stores map information in the storage device 120. The map information stores information indicating beacon IDs and positions of the beacon terminals 40 in the store, information indicating positions of display cases, bins, s or shelves for commodities, and information for determining whether the commodities displayed in the shelves are commodities with code symbol in association with one another.

FIG. 7 is a diagram illustrating a positional relation between the information processing device 10 and the beacon terminals 40. If the short-range wireless communication interface 130 is receiving signals of three or more beacons, the reading control section 115 in this embodiment calculates, based on the map information, the current position of the information processing device 10 from the positions of the beacon terminals 40 having the strongest radio wave intensity to the third strongest radio wave intensity of the signals. If the distance between the calculated position and the shelf 42 of the commodity without code symbol 41 is smaller than a predetermined threshold, the reading control section 115 sets the operation state of the information processing device 10 to the second operation state.

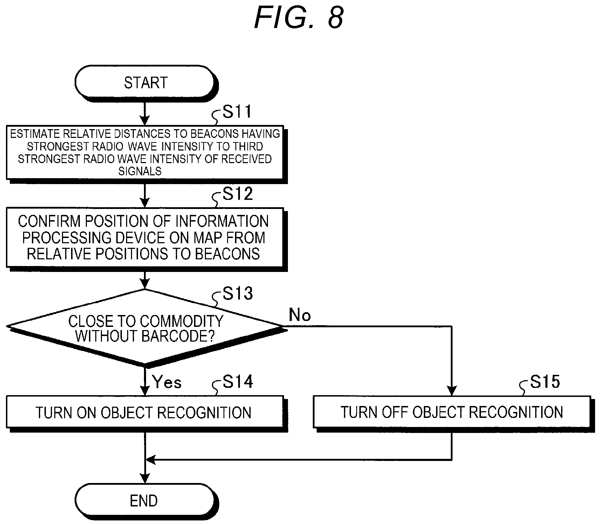

FIG. 8 is a flowchart illustrating a flow of the processing explained above executed by the information processing device 10. The reading control section 115 calculates relative distances to the beacon terminals 40 having the strongest radio wave intensity to the third strongest radio wave intensity of the received signals (Step S11). Any known method can be used for calculating a relative distance between two positions based on radio wave intensity.

Subsequently, the reading control section 115 refers to the map information and calculates a position of the information processing device 10 from the relative distances to the beacon terminals 40 (Step S12). More specifically, for example, the reading control section 115 sets, as the current position of the information processing device 10, an intersection of three circles drawn with the beacon terminals 40 as centers and with the relative distances calculated in Step S11 as radiuses.

Subsequently, the reading control section 115 determines whether the calculated position of the information processing device 10 is close to the commodity without code symbol 41 (Step S13). In Step S13, the reading control section 115 refers to the map information and determines whether the distance between the calculated position of the information processing device 10 and the shelf 42 of the commodity without code symbol 41 is smaller than a predetermined threshold. If the distance is smaller than the predetermined threshold, the reading control section 115 determines that the calculated position of the information processing device 10 is close to the commodity without code symbol 41.

If determining that the calculated position of the information processing device 10 is close to the commodity without code symbol 41 (Yes in Step S13), the reading control section 115 turns on the object recognition (Step S14). If determining that the calculated position of the information processing device 10 is not close to the commodity without code symbol 41 (No in Step S13), the reading control section 115 turns off the object recognition (Step S15).

As explained above, according to this embodiment, even in the store where the plurality of beacon terminals 40 are disposed, the information processing device 10 performs object recognition near commodities without code symbol 41 while suppressing unnecessary object recognition.

The computer programs executed in the information processing device 10 in the embodiments explained above are stored in the ROM or the like in advance.

The computer programs executed in the information processing device 10 in the embodiments explained above may be provided by a computer-readable recording medium, such as a CD-ROM, a flexible disk (FD), a CD-R, and a DVD (Digital Versatile Disk) or provided as installable or executable files.

Further, the computer programs executed in the information processing device 10 in the embodiments explained above may be stored and provided by a computer connected to a network such as the Internet and downloaded through the network. The computer programs executed in the information processing device 10 in the embodiments explained above may be provided or distributed through a network such as the Internet.

The computer programs executed in the information processing device 10 in the embodiments explained above have a module configuration by which the various functions of the sections explained above (e.g., the short-range-communication control section 111, the communication control section 112, the read-information acquiring section 113, thecommodity-information acquiring section 114, and the reading control section 115) are provided. Typically, the processor or CPU reads out the computer programs from the storage medium and executes the computer programs to thereby load sections onto a main memory. Consequently, the short-range-communication control section 111, the communication control section 112, the read-information acquiring section 113, the commodity-information acquiring section 114, and the reading control section 115 are realized by the processor executing software programs or the like.

## Claims

1. An information processing device (10) on a shopping basket or a shopping cart (30), comprising:
a communication interface (140) configured to communicate with an imaging device on the shopping basket or cart (30) and beacons (40) at product display areas (42); and
a processor configured to:
identify a commodity by either reading a commodity code (41) included in an image of the commodity from the imaging device or performing object recognition on the commodity in the image,
according to a signal received from at least one beacon (40), switch between a first mode in which the commodity is identified by reading the commodity code (41) and a second mode in which the commodity can be identified by either reading the commodity code (41) or object recognition,
calculate upon receipt of signals from at least three beacons (40) a current position of the shopping basket or cart (30) based on a strength of the signals,
calculate a distance from the shopping cart (30) or basket to a product display area (42) for a commodity without a commodity code (41) attached, and
switch to the second mode when the distance is less than a threshold value.

2. The information processing device (10) according to claim 1, wherein
in the second mode, the processor is configured to perform object recognition only after an attempt to identify the commodity by commodity code (41).

3. The information processing device (10) according to claim 1 or 2, further comprising:
an input device (13) configured to receive an input for manually switching operation mode, wherein
the processor is configured to switch to the second mode upon receipt of the input.

4. The information processing device (10) according to any of claims 1 to 3, wherein
the information processing device (10) is a tablet terminal.

5. The information processing device (10) according to any of claims 1 to 4, wherein
the imaging device is between grips of the shopping cart (30) .

6. The information processing device (10) according to any of claims 1 to 5, wherein
the communication interface (140) is configured to communicate with the imaging device and the beacon (40) according to a Bluetooth-type protocol.

7. A method for identifying a commodity using an information processing device (10) and an imaging device installed on a shopping basket or a shopping cart (30), the method comprising:
receiving a signal from at least one beacon (40) at a product display area (42);
switching the information processing device (10) between a first mode, in which a commodity is identified by reading a commodity code (41) on the commodity, and a second mode, in which the commodity is identified by either reading the commodity code (41) or by object recognition, according to the received signal;
acquiring an image of the commodity with the imaging device;
identifying the commodity in the acquired image according to whether the information processing device (10) is in the first or second mode;
calculating upon receipt of signals from at least three beacons (40) a current position of the shopping basket or cart (30) based on a strength of the signals;
calculating a distance from the shopping cart (30) or basket to a product display area (42) for a commodity without a commodity code (41) attached; and
switching to the second mode when the distance is less than a threshold value.

8. The method according to claim 7, wherein
in the second mode, object recognition is performed after an attempt to identify the commodity by commodity code (41).

9. An information processing system, comprising:
a beacon (40) on a product display area (42);
an imaging device on a shopping basket or a shopping cart (30) and configured to acquire an image of a commodity selected by a customer; and
an information processing device (10) on the shopping basket or cart (30) according to any one of claims 1 to 6.

## Patentansprüche

1. Informationsverarbeitungsvorrichtung (10) auf einem Einkaufskorb oder einem Einkaufswagen (30), umfassend:
eine Kommunikationsschnittstelle (140), die konfiguriert ist, um mit einer Bildgebungsvorrichtung auf dem Einkaufskorb oder dem Einkaufswagen (30) und Ortungsgeräten (40) an Produktpräsentationsbereichen (42) zu kommunizieren; und
einen Prozessor, der konfiguriert ist, um:
eine Ware entweder durch Lesen eines Warencodes (41), der in einem Bild der Ware von der Bildgebungsvorrichtung eingeschlossen ist, oder durch Durchführen einer Objekterkennung auf der Ware im Bild zu identifizieren,
entsprechend einem von mindestens einem Ortungsgerät (40) empfangenen Signal zwischen einem ersten Modus, in dem die Ware durch Lesen des Warencodes (41) identifiziert wird, und einem zweiten Modus, in dem die Ware entweder durch Lesen des Warencodes (41) oder durch Objekterkennung identifiziert werden kann, umzuschalten,
beim Empfang von Signalen von mindestens drei Ortungsgeräten (40) basierend auf einer Stärke der Signale eine aktuelle Position des Einkaufskorbs oder -wagens (30) zu berechnen,
eine Entfernung vom Einkaufswagen (30) oder -korb zu einem Produktpräsentationsbereich (42) für eine Ware ohne angebrachten Warencode (41) zu berechnen, und
in den zweiten Modus umzuschalten, wenn die Entfernung kleiner als ein Schwellenwert ist.

2. Informationsverarbeitungsvorrichtung (10) nach Anspruch 1, wobei
der Prozessor im zweiten Modus konfiguriert ist, um eine Objekterkennung nur nach einem Versuch, die Ware durch Warencode (41) zu identifizieren, durchzuführen.

3. Informationsverarbeitungsvorrichtung (10) nach Anspruch 1 oder 2, weiter umfassend:
ein Eingabevorrichtung (13), die konfiguriert ist, um eine Eingabe zum manuellen Umschalten des Betriebsmodus zu empfangen, wobei
der Prozessor konfiguriert ist, um beim Empfang der Eingabe in den zweiten Modus umzuschalten.

4. Informationsverarbeitungsvorrichtung (10) nach einem der Ansprüche 1 bis 3, wobei
die Informationsverarbeitungsvorrichtung (10) ein Tablet-Endgerät ist.

5. Informationsverarbeitungsvorrichtung (10) nach einem der Ansprüche 1 bis 4, wobei
sich die Bildgebungsvorrichtung zwischen Griffen des Einkaufswagens (30) befindet.

6. Informationsverarbeitungsvorrichtung (10) nach einem der Ansprüche 1 bis 5, wobei
die Kommunikationsschnittstelle (140) konfiguriert ist, um mit der Bildgebungsvorrichtung und dem Ortungsgerät (40) entsprechend einem Bluetooth-Protokoll zu kommunizieren.

7. Verfahren zum Identifizieren einer Ware unter Verwendung einer Informationsverarbeitungsvorrichtung (10) und einer Bildgebungsvorrichtung, die auf einem Einkaufskorb oder einem Einkaufswagen (30) installiert sind, das Verfahren umfassend:
Empfangen eines Signals von mindestens einem Ortungsgerät (40) an einem Produktpräsentationsbereich (42);
Umschalten der Informationsverarbeitungsvorrichtung (10) entsprechend dem empfangenen Signal zwischen einem ersten Modus, in dem eine Ware durch Lesen eines Warencodes (41) auf der Ware identifiziert wird, und einem zweiten Modus, in dem die Ware entweder durch Lesen des Warencodes (41) oder durch Objekterkennung identifiziert wird;
Erlangen eines Bilds der Ware mit der Bildgebungsvorrichtung;
Identifizieren der Ware im erlangten Bild, je nachdem, ob sich die Informationsverarbeitungsvorrichtung (10) im ersten oder zweiten Modus befindet;
Berechnen, beim Empfang von Signalen von mindestens drei Ortungsgeräten (40), einer aktuellen Position des Einkaufskorbs oder -wagens (30) basierend auf einer Stärke der Signale;
Berechnen einer Entfernung vom Einkaufswagen (30) oder -korb zu einem Produktpräsentationsbereich (42) für eine Ware ohne angebrachten Warencode (41); und
Umschalten in den zweiten Modus, wenn die Entfernung kleiner als ein Schwellenwert ist.

8. Verfahren nach Anspruch 7, wobei
im zweiten Modus, eine Objekterkennung nach einem Versuch, die Ware durch den Warencode (41) zu identifizieren, durchgeführt wird.

9. Informationsverarbeitungssystem, umfassend:
ein Ortungsgerät (40) auf einem Produktpräsentationsbereich (42);
eine Bildgebungsvorrichtung auf einem Einkaufskorb oder einem Einkaufswagen (30), die konfiguriert ist, um ein Bild einer von einem Kunden ausgewählten Ware zu erlangen; und
eine Informationsverarbeitungsvorrichtung (10) auf dem Einkaufskorb oder -wagen (30) nach einem der Ansprüche 1 bis 6.

## Revendications

1. Dispositif de traitement d'informations (10) sur un panier d'achat ou un chariot d'achat (30), comprenant :
une interface de communication (140) configurée pour communiquer avec un dispositif d'imagerie sur le panier ou chariot d'achat (30) et des balises (40) au niveau de zones d'affichage de produit (42) ; et
un processeur configuré pour :
identifier une marchandise soit en lisant un code de marchandise (41) inclus dans une image de la marchandise à partir du dispositif d'imagerie soit en effectuant une reconnaissance d'objet sur la marchandise dans l'image,
selon un signal reçu d'au moins une balise (40), basculer entre un premier mode dans lequel la marchandise est identifiée par lecture du code de marchandise (41) et un second mode dans lequel la marchandise peut être identifiée soit par lecture du code de marchandise (41) soit par reconnaissance d'objet,
calculer à la réception de signaux provenant d'au moins trois balises (40) une position actuelle du panier ou chariot d'achat (30) sur la base d'une intensité des signaux,
calculer une distance entre le chariot d'achat (30) ou le panier et une zone d'affichage de produit (42) pour une marchandise sans code de marchandise (41) attaché, et
basculer au second mode lorsque la distance est inférieure à une valeur seuil.

2. Dispositif de traitement d'informations (10) selon la revendication 1, dans lequel
dans le second mode, le processeur est configuré pour effectuer une reconnaissance d'objet uniquement après une tentative d'identification de la marchandise par code de marchandise (41).

3. Dispositif de traitement d'informations (10) selon la revendication 1 ou la revendication 2, comprenant en outre :
un dispositif d'entrée (13) configuré pour recevoir une entrée de mode de fonctionnement de basculement manuel, dans lequel
le processeur est configuré pour basculer au second mode à la réception de l'entrée.

4. Dispositif de traitement d'informations (10) selon l'une quelconque des revendications 1 à 3, dans lequel
le dispositif de traitement d'informations (10) est un terminal de tablette.

5. Dispositif de traitement d'informations (10) selon l'une quelconque des revendications 1 à 4, dans lequel
le dispositif d'imagerie est entre les poignées du chariot d'achat (30).

6. Dispositif de traitement d'informations (10) selon l'une quelconque des revendications 1 à 5, dans lequel
l'interface de communication (140) est configurée pour communiquer avec le dispositif d'imagerie et la balise (40) selon un protocole de type Bluetooth.

7. Procédé d'identification d'une marchandise à l'aide d'un dispositif de traitement d'informations (10) et d'un dispositif d'imagerie installé sur un panier d'achat ou un chariot d'achat (30), le procédé comprenant :
la réception d'un signal provenant d'au moins une balise (40) au niveau d'une zone d'affichage de produit (42) ;
le basculement du dispositif de traitement d'informations (10) entre un premier mode, dans lequel une marchandise est identifiée par lecture d'un code de marchandise (41) sur la marchandise, et un second mode, dans lequel la marchandise est identifiée soit par lecture du code de marchandise (41), soit par reconnaissance d'objet, selon le signal reçu ;
l'acquisition d'une image de la marchandise avec le dispositif d'imagerie ;
l'identification de la marchandise dans l'image acquise selon que le dispositif de traitement d'informations (10) est dans le premier ou le second mode ;
le calcul, à la réception de signaux provenant d'au moins trois balises (40), d'une position actuelle du panier ou chariot d'achat (30) sur la base d'une intensité des signaux ;
le calcul d'une distance entre le chariot d'achat (30) ou le panier et une zone d'affichage de produit (42) pour une marchandise sans code de marchandise (41) attaché ; et
le basculement au second mode lorsque la distance est inférieure à une valeur seuil.

8. Procédé selon la revendication 7, dans lequel, dans le second mode, la reconnaissance d'objet est effectuée après une tentative d'identification de la marchandise par code de marchandise (41).

9. Système de traitement d'informations comprenant :
une balise (40) sur une zone d'affichage de produit (42) ;
un dispositif d'imagerie sur un panier d'achat ou un chariot d'achat (30) et configuré pour acquérir une image d'une marchandise sélectionnée par un client ; et
un dispositif de traitement d'informations (10) sur le panier ou le chariot d'achat (30) selon l'une quelconque des revendications 1 à 6.
